# EUROPÄISCHE PATENTSCHRIFT

(11) **EP 1 573 223 B1**
(45) Veröffentlichungstag und Bekanntmachung des Hinweises auf die Patenterteilung: **08.10.2008**
(21) Anmeldenummer: 03785575.6
(22) Anmeldetag: 15.12.2003
(51) Int. Cl.: F16F 1/38, F16B 21/18

(54) **GELENKLAGER**
ROCKER BEARING
ARTICULATION A ROTULE

(30) Priorität: 16.12.2002 DE 10258987
(43) Veröffentlichungstag der Anmeldung: 14.09.2005
(73) Patentinhaber: ZF Lemförder Metallwaren AG, 49441 Lemförde (DE)
(72) Erfinder: WOLTER, Stefan, 49459 Lembruch (DE); SCHMUDDE, Werner, 49593 Bersenbrück (DE); RICHTER, Reinhard, 49163 Bohmte (DE); BUHL, Reinhard, 49163 Bohmte (DE); BUBLIES, Holger, 49078 Osnabrück (DE)
(86) Internationale Anmeldenummer: PCT/DE2003/004132
(87) Internationale Veröffentlichungsnummer: WO 2004/055407

(56) Entgegenhaltungen:
- EP-A- 0 819 556
- WO-A-02/06067
- PATENT ABSTRACTS OF JAPAN vol. 2002, no. 11, 6. November 2002 (2002-11-06) -& JP 2002 188619 A (SAITAMA KIKI KK), 5. Juli 2002 (2002-07-05)

## Beschreibung

Die Erfindung betrifft ein Gelenklager vorzugsweise für Fahrwerkskomponenten von Kraftfahrzeugen mit dem im Oberbegriff des Anspruches 1 genannten gattungsbildenden Merkmalen.

Die dort beschriebenen Gelenklager werden vorzugsweise in Fahrwerksmodulen für Nutzkraftfahrzeuge eingesetzt. Derartige Lager haben sich prinzipiell im Stand der Technik bewährt. Unter normalen Betriebsbedingungen werden radiale, axiale und kadarnische Bewegungen des Innenteils gegenüber dem Gehäuse durch molekulare Verformungen des unter axialer Vorspannung stehenden Elastomerkörpers realisiert. Die Vorspannung wird während der Montage des Gelenklagers dadurch herbeigerührt, dass das Innenteil mit dem daran haftend angeordneten Elastomerkörper und daran festhaftenden, in axialer Richtung angeordneten, als Anschlagringe ausgebildete Lagerschalen in das Gehäuse eingesetzt, anschließend der Elastomerkörper vorzugsweise durch eine Presse über die Anschlagringe auf ein definiertes Maß zusammengedrückt und gleichzeitig der Federsicherungsring in die radiale Vertiefung des Innenraumes des Gelenkgehäuses eingesetzt wird, wobei die gegenüberliegenden Anschlagringe auf einer in das Gehäuse eingedrehten Schulter aufliegen, so dass ein Wiederentspannen des Elastomerkörpers nicht mehr oder nur geringfügig möglich ist. Eine derartige Anordnung ist beispielsweise in der WO-A-02/06067 gezeigt.

In der Praxis hat es sich gezeigt, dass es unter bestimmten, extremen Betriebsbedingungen bei dynamischer Belastung des Gelenklagers, wie sie im Fahrbetrieb auftreten können, zu Relativbewegungen zwischen dem Elastomerkörper mit den daran festhaftend angeordneten Anschlagringen und dem Federsicherungsring kommen kann. Dabei besteht im Einzelfall die Gefahr, dass der Federsicherungsring aus der radialen Vertiefung des Gelenkgehäuses, in die er eingesetzt ist, herausspringt, wodurch das Gelenklager schlagartig seine Funktion einbüßt.

Aufgabe der vorliegenden Erfindung ist es daher, ein Gelenklager der geschilderten gattungsgemäßen Art so weiter zu entwickeln, dass auch unter extremen Betriebsbedingungen die zuverlässige Funktionsweise des Gelenklagers gewährleistet ist, indem sichergestellt wird, dass der verwendete Sicherungsring, welcher eine kostengünstige und einfache Vorspannung des Elastomerkörpers des Gelenklagers darstellt, zu jeder Zeit an der im Rahmen der Montage einmal festgelegten Position verbleibt.

Diese Aufgabe wird zusammen mit den gattungsbildenden Merkmalen des Anspruches 1 durch die im kennzeichnenden Teil offenbarte technische Lehre gelöst. Erfindungsgemäß weist der mit dem Federsicherungsring zusammenwirkende Anschlagring des Elastomerkörpers in seiner dem Federsicherungsring zugewandten axialen Außenseite eine radial an der Außenkante des Anschlagringes umlaufende Ausnehmung auf, in die der Federsicherungsring in montiertem Zustand des Gelenklagers eingreift.

Durch diese erfindungsgemäße Merkmalskombination kann ein Herausspringen des Federsicherungsringes aus der im Gelenkgehäuse befindlichen Vertiefung infolge radialer Verformung des Federsicherungsringes zuverlässig ausgeschlossen werden.

Entsprechend einer vorteilhaften Weiterbildung ist es dabei ausreichend, wenn die Tiefe der Ausnehmung in axialer Richtung des Gelenklagers etwa die Hälfte der Dicke des verwendeten Federsicherungsringes trägt.

Im Folgenden wird ein Ausführungsbeispiel des Gegenstandes der Erfindung anhand der beigefügten Zeichnungen näher erläutert.

Es zeigt:
- Figur 1: eine Halbschnittdarstellung durch ein erfindungsgemäßes Gelenklager und
- Figur 2: eine vergrößerte Darstellung des Details A aus Figur 1.

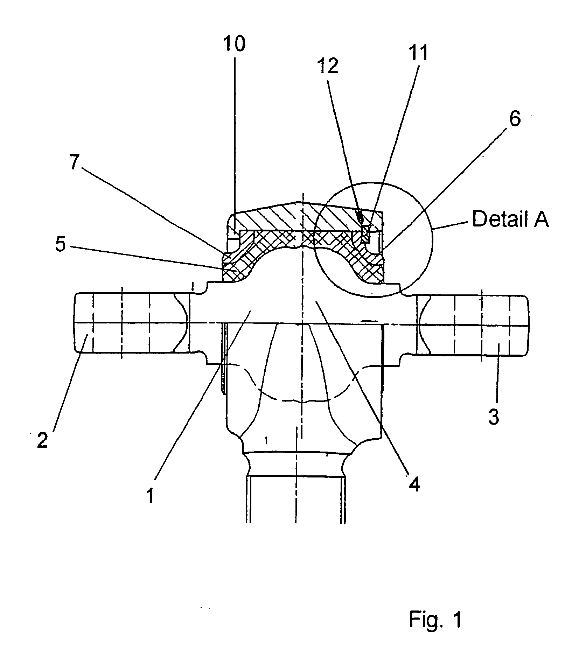

Das Gelenklager besteht entsprechend der Darstellung der Figur 1 aus einem Innenteil 1, welches an beiden freien Enden Befestigungszapfen 2 und 3 für die Verbindung mit einem Kraftfahrzeugteil aufweist. Der zentrale, kugelförmig ausgebildete Mittelbereich 4 des Innenteils 1 ist von einem Elastomerkörper 5 umschlossen, welcher mit dem Innenteil 1 festhaftend, beispielsweise durch einen Vulkanisationsprozess verbunden ist. An den in Axiallängsrichtung des Gelenklagers gesehenen Stirnseiten des Elastomerkörpers 5 sind jeweils Anschlagringe 6 und 7 angeordnet und festhaftend mit dem Elastomerkörper verbunden. Der Elastomerkörper 5 ist zusammen mit den Anschlagringen 6 und 7 in einem Gelenkgehäuse 8 aufgenommen, welches im Wesentlichen rohrförmig ausgebildet ist und einen zylindrischen Innenraum 9 bildet. Der zylindrische Innenraum 9 ist an einer Seite mit einer umlaufenden Schulter 10 versehen, gegen die sich der Anschlagring 7 abstützt. Der andere Anschlagring 6 stützt sich im montierten Zustand des Gelenklagers gegen einen Federsicherungsring 11 ab, welcher in einer umlaufenden radialen Vertiefung 12 des Innenraumes des Gelenkgehäuses eingesetzt ist. Die Vertiefung ist als U-förmige Nut ausgebildet. Der Elastomerkörper 5 besitzt in unmontiertem Zustand in axialer Längsrichtung eine größere Breite als diejenige, die zwischen der Innenseite der Schulter 10 und der Innenseite des Federsicherungsringes 11 innerhalb des Gelenkgehäuses 8 gegeben ist. Während des Montageprozesses wird der Elastomerkörper deshalb in axialer Richtung so weit zusammengedrückt, dass der Federsicherungsring 11 in die dafür im zylindrischen Innenraum 9 des Gelenkgehäuses 8 vorhandene Vertiefung 12 eingesetzt werden kann. Damit ist eine Wiederentspannung des Elastomerkörpers 5 ausgeschlossen und somit eine Vorspannung von Letzterem gegeben.

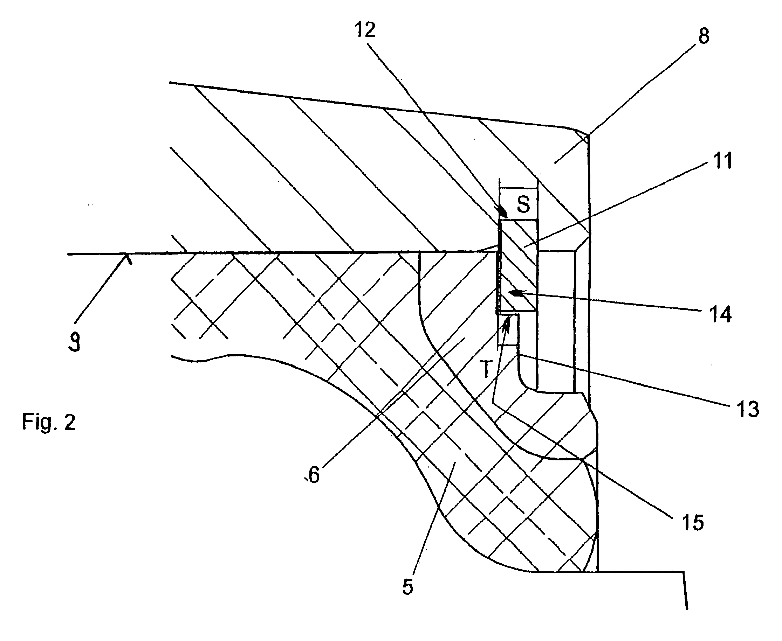

Um zu gewährleisten, dass unter allen Betriebsbedingungen, insbesondere auch bei hoher dynamischer Belastung des Gelenklagers, der Federsicherungsring 11 immer in der in der Figur 1 dargestellten Position in der Vertiefung 12 verbleibt, weist das Gelenklager erfindungsgemäß die in der Figur 2 als vergrößerte Zeichnung des Details A aus Figur 1 dargestellte Besonderheit auf.

In der Figur 2 ist der Befestigungsbereich des Elastomerkörpers 5 mit dem benachbarten Anschlagring 6 durch den Federsicherungsring 11 dargestellt, der in der Ausnehmung 12 des Gelenkgehäuses 8 aufgenommen ist. Die erfindungsgemäße technische Lehre sieht dabei vor, dass der mit dem Federsicherungsring 11 zusammenwirkende Anschlagring 6 an seiner dem Federsicherungsring zugewandten axialen Außenseite 13 eine Ausnehmung 14 aufweist. Diese Ausnehmung ist an der Außenkante des Anschlagringes 6 umlaufend angeordnet und besitzt einen im Wesentlichen rechteckförmigen Querschnitt. Die radiale Begrenzungsfläche 15 ist dabei vom Durchmesser so bemessen, dass sie nur unwesentlich kleiner ist als der kleinste Innendurchmesser des Federsicherungsringes 11.

Der Darstellung der Figur 2 ist darüber hinaus zu entnehmen, dass das Maß T, welches die Tiefe der Ausnehmung 14 bezeichnet, im Wesentlichen halb so groß ist wie die Dicke S des Federsicherungsringes 11. Die geometrische Gestaltung und die Abmaße der Ausnehmung 14 gewährleisten, dass nach dem Einsetzen des Federsicherungsringes 11 ein Herausschnappen von Letzterem aus der Vertiefung 12 in Folge dynamischer Belastungen ausgeschlossen ist.

### Bezugszeichenliste

- 1.: Innenteil
- 2.: Befestigungszapfen
- 3.: Befestigungszapfen
- 4.: Mittelbereich
- 5.: Elastomerkörper
- 6.: Anschlagring
- 7.: Anschlagring
- 8.: Gelenkgehäuse
- 9.: Zylindrischer Innenraum
- 10.: Schulter
- 11.: Federsicherungsring
- 12.: Vertiefung
- 13.: Außenseite
- 14.: Ausnehmung
- 15.: radiale Begrenzungsfläche

## Patentansprüche

1. Gelenklager vorzugsweise für Fahrwerkskomponenten von Kraftfahrzeugen mit einem rohrförmigen, einen zylindrischen Innenraum bildenden Gelenkgehäuse (8), in welchem ein metallisches Innenteil (1) und ein das Innenteil (1) umgebender, an diesem haftend angeordneter Elastomerkörper (5) aufgenommen sind, wobei der Elastomerkörper (5) in axialer Längsrichtung des Gelenklagers unter Zwischenschaltung von mit dem Elastomerkörper festhaftend verbundenen, als Lagerschalen ausgebildeten Anschlagringen (6, 7), welche mit korrespondierenden, in den Innenraum des Gelenkgehäuses (8) vorstehenden Vorsprüngen (10) zusammenwirken, axial vorgespannt ist und wobei mindestens einer der Vorsprünge durch einen in einer radialen Vertiefung (12) des Innenraumes des Gelenkgehäuses (8) eingesetzten Federsicherungsring (11) gebildet ist, welcher mit seiner zum Zentrum des Innenraumes gerichteten Seitenfläche an einer der axialen Anschlagringaußenseiten (13) anliegt,
**dadurch gekennzeichnet, dass**
der mit dem Federsicherungsring (11) zusammenwirkende Anschlagring (6) in seiner dem Federsicherungsring (11) zugewandten axialen Außenseite (13) eine radial an der Außenkante des Anschlagringes (6) umlaufende Ausnehmung (14) aufweist, in die der Federsicherungsring (11) in montiertem Zustand des Gelenklagers eingreift.

2. Gelenklager nach Anspruch 1,
**dadurch gekennzeichnet, dass**
die Tiefe der Ausnehmung (14) in axialer Längsrichtung des Gelenklagers etwa die Hälfte der Dicke des Federsicherungsringes (11) beträgt.

## Claims

1. Joint bearing preferably for chassis components of motor vehicles having a tubular joint housing (8), which forms a cylindrical interior and accommodates a metal inner part (1) and an elastomer body (5) that surrounds and is adherently disposed on the inner part (1), wherein the elastomer body (5) is axially preloaded in axial longitudinal direction of the joint bearing with the interposition of stop rings (6, 7) in the form of bearing shells, which are connected adherently to the elastomer body and interact with corresponding projections (10) that protrude into the interior of the joint housing (8), and wherein at least one of the projections is formed by means of a spring-retaining ring (11), which is inserted in a radial indentation (12) of the interior of the joint housing (8) and lies with its side face facing the centre of the interior against one of the axial stop ring outer sides (13),
**characterized in that**
the stop ring (6) that interacts with the spring-retaining ring (11) has in its axially outer side (13) facing the spring-retaining ring (11) a recess (14), which extends radially around the outer edge of the stop ring (6) and into which the spring-retaining ring (11) engages in the assembled state of the joint bearing.

2. Joint bearing according to claim 1,
**characterized in that**
the depth of the recess (14) in axial longitudinal direction of the joint bearing is approximately half the thickness of the spring-retaining ring (11).

## Revendications

1. Palier articulé, de préférence pour des composants de châssis de véhicules automobiles, comprenant un boîtier d'articulation tubulaire (8), formant un espace intérieur cylindrique, dans lequel sont reçus un élément métallique intérieur (1) et un corps élastomère (5) entourant l'élément intérieur (1), monté adhérant sur celui-ci, le corps élastomère (5) étant axialement précontraint, dans le sens axial longitudinal du palier articulé, par l'intermédiaire de bagues de butée (6, 7) reliées de façon fixe en adhérant au corps élastomère, réalisées sous forme de coquilles de palier, qui coopèrent avec des saillies (10) correspondantes saillant à l'intérieur de l'espace intérieur du boîtier d'articulation (8), et où l'une au moins des saillies est formée par un anneau élastique d'arrêt (11) inséré dans une gorge radiale (12) due l'espace intérieur du boîtier d'articulation (8), anneau dont la face latérale dirigée vers le centre de l'espace intérieur est en contact avec l'une des faces axiales extérieures (13) des bagues de butée,
**caractérisé en ce que**
la bague de butée (6) qui coopère avec l'anneau élastique d'arrêt (11) comporte, dans sa face axiale extérieure (13) qui est tournée vers l'anneau élastique d'arrêt (11), un évidement périphérique (14) entourant radialement le bord extérieur de la bague de butée (6), évidement dans lequel s'engage, en situation d'assemblage du palier articulé, l'anneau élastique d'arrêt (11).

2. Palier articulé selon la revendication 1,
**caractérisé en ce que**
la profondeur de l'évidement (14), dans le sens longitudinal axial du palier articulé, représente environ la moitié de l'épaisseur de l'anneau élastique d'arrêt (11).
